# EUROPEAN PATENT SPECIFICATION

(11) **EP 1 152 553 B1**
(45) Date of publication and mention of the grant of the patent: **09.12.2009**
(21) Application number: 01109274.9
(22) Date of filing: 14.04.2001
(51) Int. Cl.: H04B 7/185

(54) **Ground to space to ground trunking system**
Bundelfunksystem Erde zu Weltall zu Erde
Système multilignes terre espace terre

(30) Priority: 04.05.2000 US 565296
(43) Date of publication of application: 07.11.2001
(73) Proprietor: Hughes Electronics Corporation, El Segundo, California 90245-0956 (US)
(72) Inventor: Valley, George C., Los Angeles, CA 90064 (US); La France, Thomas S., Manhatten Beach, CA 90266 (US); Lim, Wah L., Santa Ana, CA 92705 (US)
(74) Representative: Lindner, Michael

(56) References cited:
- EP-A- 0 771 087
- US-A- 4 928 317
- US-A- 5 652 750
- US-A- 5 659 413

## Description

### Technical Field

The present invention relates generally to trunking systems for communication between two continents. More specifically, the present invention relates generally to a trunking system using a satellite as a component of the system.

### Background Of The Invention

Communication systems between continents are referred to as a trunking system. Currently, submarine fiber systems are employed to couple the communication systems of continents together. The submarine fiber systems, however, are expensive and time consuming to construct.

The submarine fiber systems use optical fibers and employ wavelength division multiplexing (WDM) technology. Wavelength division multiplexing allows multiple signals to be transmitted on an optical fiber, each signal using a different wavelength for communication.

The distance across an ocean is substantial. One problem with using a long length of fiber with densely space wavelengths is a phenomenon known as four-wave mixing. Four-wave mixing is a non-linear optical effect that reduces the effectiveness of the fiber.

Another method for continent to continent communication contemplated is the use of a satellite using radio frequency signals for communication. One problem associated with using radio frequency systems is limited by the bandwidth. That is, satellite communications to ground are licensed and, therefore, the amount of bandwidth needed for a trunking system would likely not be licensed due to its breadth. Another problem associated with radio frequency communication is that the power available on the spacecraft (satellite) is limited. Thus, to handle a large amount of signals, a large amount of power must be available. Yet, another problem with radio frequency communications is that to handle a large number of signals, the size of the on-board antennas must be increased. Increasing size and weight increase the expense of a satellite program. Also, the phased array antenna technology used for satellite communications is limited in terms of the quantity of signals required for intercontinental communications. Radio frequencies above about 100 GHz are currently available. One problem with such frequencies is that they appear to be unusable because atmospheric attenuation is very high.

In terrestrial wavelength division multiplexing systems, independent streams of data are sent on separate wavelengths over the same fiber. The power of each wavelength is modulated independently. The wavelengths are then combined by optical multiplexing devices. The whole set of wavelengths is amplified together in a single amplifier and injected into a long-haul fiber. Additional amplifiers must be spaced apart along the length of the wire so that the signal is not reduced. To add to the complexity, the amplifiers and fibers are submerged into the ocean. Therefore, the amplifiers and wires must be able to withstand the harsh environmental conditions at the bottom of the ocean.

Document US 5659413 discloses a satellite trunking system comprising a satellite, a first ground system on a first landmass coupled to a first terrestrial network, a second ground system on a second landmass coupled to a second terrestrial network, said second ground system communicating with said first ground system through said satellite.

### Summary Of The Invention

It is an object of the invention to provide a trunking system employing a satellite for intercontinental communications. It is a further object of the invention to provide an optical system for ground to space to ground trunking.

In one aspect of the invention as defined in claim 1, an optical trunking system includes a satellite for sending and receiving optical signals. A first ground station is positioned on a first land mass and a second ground station is positioned on a second land mass. Each ground station communicates to the other ground stations through the satellite using optical signals.

In a further aspect of the invention, a method for communicating between two land masses comprises the steps of: generating an optical signal at a first land mass; directing the optical signal to a first satellite: receiving the optical signal; directing the optical signal to a ground station at a second land mass; and receiving the optical signal at the second ground station.

One advantage of the invention is that optical signals may be employed which are not regulated for satellite communications. Another advantage of the invention is that wavelength division multiplexing in free space is not limited by four-wave mixing. Another advantage of the invention is that cloud obscuration may be overcome by employing multiple ground sites over a predetermined area for the sending and receiving of the optical signals.

Other objects and advantages of the present invention will become apparent when viewed in light of the detailed description of the preferred embodiment when taken in conjunction with the attached drawings and appended claims.

### Brief Description of the Drawings

FIGURE 1 is a perspective view of a communication system according to the present invention.
FIGURE 2 is a perspective view of an alternative communication system according to the present invention.
FIGURE 3 is a plan view of a ground system employed in a satellite communication system according to the present invention.
FIGURE 4A is a block diagram schematic view of a ground station transmitting system.
FIGURE 4B is a block diagram schematic view of a ground station receive circuit according to the present invention.
FIGURE 5 is a block diagram schematic view of the communication circuit employed in a satellite system of a communication system according to the present invention.

### Best Mode(s) For Carrying Out The Invention

The present invention is described herein relative to a trunking system. However, one skilled in the art would recognize that the teachings of the present invention may also be suitable for other types of satellite communications.

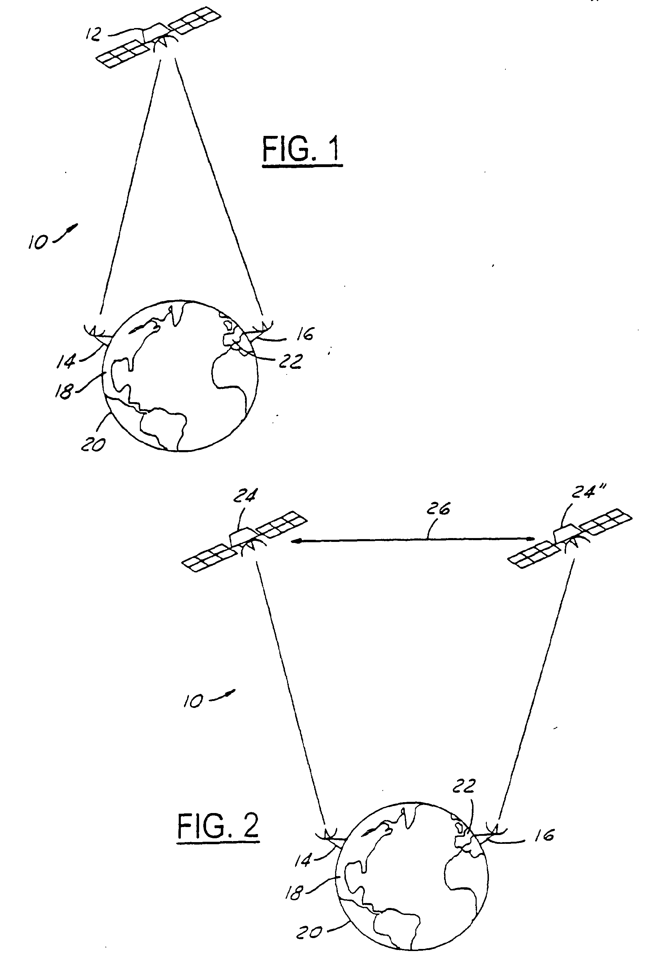

Referring now to Figure 1, a satellite trunking system 10 is illustrated having a single satellite 12 that is in communication with a first ground system 14 and a second ground system 16. Satellite 12 is preferably a geostationary earth orbit satellites (GEO). However, the teaching may also be applied to satellites having other orbits such as Medium Earth Orbit (MEO) or Low Earth Orbit (LEO). The first ground system 14 is located on a first landmass 18 on the earth 20. The second ground system 16 is located on a second landmass 22. Each landmass, for example, may be separate continents divided by an ocean. Each ground system 14, 16 communicates with a terrestrial network such as a phone network.

Referring now to Figure 2, satellite trunking system 10 may incorporate a pair of satellites 24, 24''. By using a pair of satellites 24, 24'', each satellite 24, 24'' may be interconnected through an optical link 26. Using a pair of satellites 24, 24'' such as that shown in Figure 2, is particularly useful "when spanning a longer distance than that of Figure 1. By using two satellites, the elevation angle at first ground system 14 and second ground system 16 may be increased. Also, by increasing the elevation angle, atmospheric affects on the signals between satellites 24, 24'' and first ground system 14 and second ground system 16 are reduced.

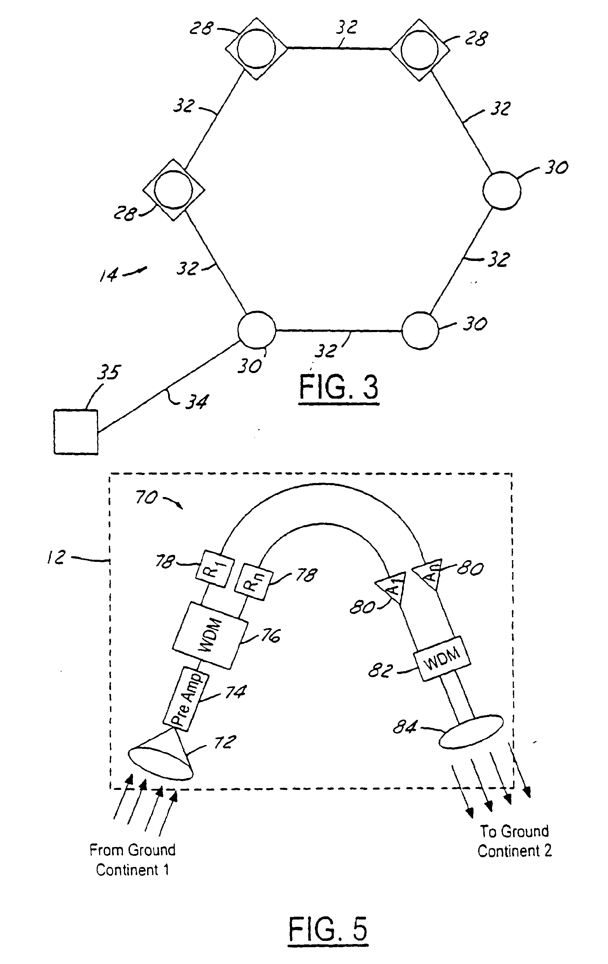

Referring now to Figure 3, the layout of a first ground system 14 is generally shown. First ground system 14 and second ground system 16 may each be configured the same. First ground system 14 is comprised of ground telescope buildings 28 and feed nodes 30. Feed nodes 30 include a ground telescope and also include a terrestrial fiber feed 34. Although three ground telescope buildings and three feed nodes 30 are shown, various numbers of ground telescope buildings 28 and feed nodes 30 may be employed. Ground telescope buildings 28 and feed nodes 30 are coupled by a fiber optic ring network 32. As illustrated, fiber optic ring network 32 is hexagonal in shape, having a ground telescope building 28 or feed node 30 at a respective corner. In a preferred embodiment, the distance of each section of fiber optic ring network 32 is 100 kilometers. By spacing each ground telescope building 28 and feed node 30 a substantial distance apart, it is likely that at least one site in each of first ground system 14 and second ground system 16 will have a cloud-free line of sight to the satellite.

Terrestrial fiber feed 34 is connected to a conventional land-based communication system. Fiber feed 34 provides the link to a terrestrial network 35, such as a phone system. Each ground system on each landmass is coupled to a separate terrestrial network.

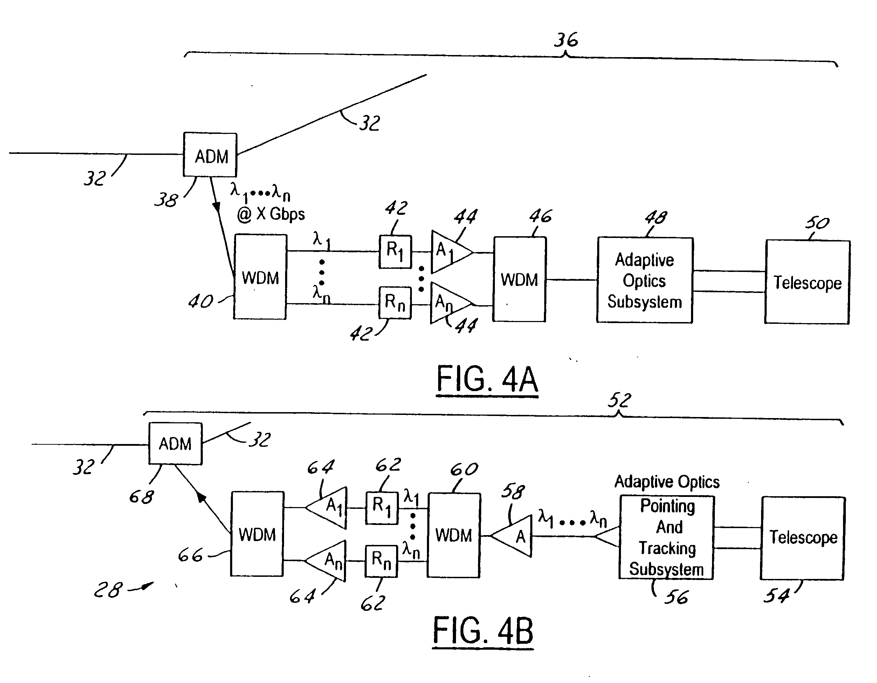

Referring now to Figure 4A, a general block diagram of a transmitting circuit 36 for a ground telescope building 28 is illustrated. Transmitting circuit 36 has an add/drop multiplexer (ADM) 38 that is used to couple various wavelengths λ₁ through λₙ at a predetermined gigabit rate per second. Add/drop multiplexers 38 remove each of the desired wavelengths simultaneously from fiber optic ring network 32. A wave division demultiplexer (WDM) 40 is coupled to add/drop multiplexer 38. Wave division demultiplexer divides the signal into its component parts, namely into each wavelength λ₁ through λₙ. Wave division demultiplexer 40 is coupled to a regeneration circuit 42. Preferably, one regeneration circuit 42 is provided for each wavelength. Regeneration circuit 42 may provide optical or electrical regeneration to each wavelength. An amplifier 44 is coupled to each regeneration circuit 42. Amplifier 44 may, for example, be an erbium doped fiber amplifier or amplifier chain. Each of the signal wavelengths are then coupled to a wavelength divi-sion multiplexer (WDM)46 which recombines the signals into a single amplified signal.

Wavelength division multiplexer 46 is coupled to an adaptive optics subsystem 48 which is then coupled to a telescope 50. Telescope 50 transmits the optical signals to satellite 12. Adaptive optics 48 are used in conjunction with telescope 50 due to atmospheric turbulence which causes deleterious effects on the uplink and downlink signals. On the uplink, turbulent refractive index fluctuations cause beam wander or jitter, beam breakup and scintillation. Beam wander may be corrected by using a fast tracking telescope system. Beam breakup can be corrected with adaptive optics subsystem 48. Scintillation can be improved by averaging techniques on the signal. Various types of adaptive optic subsystems 48 are known to those skilled in the art. Thus, adaptive optics subsystem 48 is used to compensate for differences in the movement of the spacecraft and aberrations due to the atmosphere.

Referring now to Figure 4B, a receiving circuit 52 of ground telescope building 28 is illustrated. Receiving circuit 52 has a receiving telescope 54 coupled to an adaptive optics subsystem 56 that includes a pointing and tracking subsystem to direct telescope 54 toward a satellite. Adaptive optics subsystem 56 operates in a similar manner to that of adaptive optics subsystem 48 compensates the pointing of telescope 54 for atmospheric turbulence. Turbulence on the downlink may cause beam wander and break-up which decreases the power into the system. Adaptive optics subsystem 48 precompensates a beam for aberrations due to turbulence so that after propagation through turbulence, the beam is nearly diffraction limited.

Adaptive optic subsystem 56 is coupled to a preamplifier 58. Preamplifier 58 amplifies the entire beam including each of the wavelengths included in the received beam. Preamplifier 58 is coupled to a wave division demultiplexer (WDM) 60 which divides the signals in a similar manner to that described above in Figure 4A. Wave division demultiplexer 60 is coupled to a regeneration circuit 62, an amplifier 64, and a wave division multiplexer (WDM) 66. Wave division multiplexer is coupled to an add/drop circuit (ADM) 68. Add/drop circuit 68 adds the received wavelengths to fiber optic ring network 32. Wave division demultiplexer 60, regeneration circuit 62, amplifier 64, and wave division multiplexer 66, operate in a similar manner to that described above in Figure 4A.

Referring now to Figure 5, a satellite communication circuit 70 within satellite 12 is illustrated. Satellite communication circuit 70 has a receive telescope 72 coupled to a preamplifier 74. A wave division multiplexer (WDM) 76 is coupled to preamplifier 74. Preamplifier 74 amplifies the received wavelengths from receive telescope 72. Wave division demultiplexer 76 breaks the received signal into its component wavelengths and is coupled to regeneration circuits 78. Regeneration circuits 78 are coupled to amplifiers 80. Preferably, one regeneration circuit and one amplifier 80 are provided for each communication wavelength.

Each amplifier 80 is coupled to a wavelength division multiplexer (WDM) 82 which reassembles the amplified signals from amplifier 80. Wave division multiplexer 82 is coupled to transmitting telescope 84. Transmitting telescope 84 is directed to the second ground system which is preferably on a second continent. Transmitting telescope 84 transmits a signal having each active communication wavelength. Preamplifier 74, wave division multiplexer 76, regeneration circuit 78, amplifiers 80 and wave division multiplexer 82 all operate in a similar manner to that described in Figures 4A and 4B. However, wave division multiplexer 82 is coupled to a transmitting telescope 84 rather than to an add/drop multiplexer.

In operation, using wave division multiplexing in a satellite communication system, a much larger path loss is associated with that compared to terrestrial systems. To overcome path losses, several approaches may be taken, separately or in combination. For example, higher power erbium doped fiber amplifiers (EDFAs), large aperture telescopes to focus the; light, or the use of a single EDFA per wavelength with multiplexing after amplification may be employed. In one embodiment, all of these techniques may be used in combination to transmit 2.5 Gbps to a GEO spacecraft with a bit error rate of 10⁻⁶.

Each continent preferably has a ground system such as one similar to that of Figure 3. Each ground station is coupled to a terrestrial fiber feed for receiving and transmitting information from a communications infrastructure. The communication infrastructure may include public terrestrial phone networks as well as corporate terrestrial phone networks. Each ground station may potentially communicate with the satellite. Each ground system 14, 16, measures the amount of cloud cover in the path between each ground telescope building 28 or feed node 30 and satellite 12. The least distorted path is chosen for transmitting and receiving communication signals from the satellite 12. Optical signals may be input directly from a terrestrial fiber feed 34 into fiber optic ring network 32. The signals travel rapidly through fiber optic ring network 32 and are directed to the ground telescope building 28 having the clearest path to satellite 12. The optical signals are then generated and transmitted through the telescope into satellite 12. Satellite 12 receives the optical signals, amplifies the optical signals, and retransmits the optical signals to the second ground system on a second continent. If the elevation angle is too low due to a great distance between first ground system and second ground system, a second or more satellites may be incorporated into the system. In such a manner, transmitting telescope 84 may be directed to transmit information to the second satellite rather than to the second ground system.

While particular embodiments of the invention have been shown and described, numerous variations and alternate embodiments will occur to those skilled in the art. Accordingly, it is intended that the invention be limited only in terms of the appended claims.

## Claims

1. A satellite trunking system (10) for communicating with a first terrestrial network and a second terrestrial network, comprising:
a satellite system (12);
a first ground system (14) on a first landmass (18) coupled to the first terrestrial network and optically coupled to the satellite system (12), said first ground system (14) having a first plurality of optically coupled ground stations, said first ground system being adapted to determine a first ground station having a least distorted path between the satellite system and the first plurality of ground stations; and
a second ground system (16) on a second landmass (22) coupled to the second terrestrial network and optically coupled to the satellite system, said second ground system comprising a plurality of optically coupled ground stations, said second ground system being adapted to determine a second ground station having a least distorted path between the satellite system and the second plurality of ground stations, said second ground system (16) communicating with said first ground system through said satellite system and the least distorted path between the satellite system and the first plurality of ground stations and the least distorted path between the satellite system and the second plurality of ground stations.

2. A satellite trunking system as recited in claim 1, **characterized in that** said satellite system comprises at least a first satellite (12).

3. A satellite trunking system as recited in claim 2, **characterized in that** said satellite system comprises a second satellite (24) optically coupled to said first satellite (12).

4. A satellite trunking system as recited in claim 3, **characterized in that** said second satellite (24) is in communication with said second ground system (16) and said first satellite (12) is in communication with said first ground system (14).

5. A trunking system as recited in claim 1, **characterized in that** said satellite system (12) is adapted to send and receive optical signals,
said first ground system (14) is optically coupled to said satellite (12); and
said second ground system (16) is optically coupled to said satellite system (12);
said first ground system (14) sending and receiving optical signals from said satellite system (12) through the least disported path between the satellite system and the first plurality of ground stations,
said satellite sending and receiving optical signals from said first ground system through the least distorted path, between the satellite system and the first plurality of ground stations, said second ground system sending and receiving optical signals from said satellite (12) system through the least distorted path between the satellite system and the second plurality of ground stations.

6. A trunking system as recited in claim 5, **characterized in that** said first ground system (14) is positioned on a first landmass (18) and said second ground system (16) is positioned on a second landmass (22).

7. A trunking system as recited in claim 1, **characterized in that** said fist ground system (14) comprises a plurality of ground stations (14) positioned a predetermined distance apart.

8. A trunking system as recited in claim 7, **characterized in that** said first plurality of ground stations are coupled by a fiber optic ring network (32).

## Patentansprüche

1. Satelliten-Bündelfunksystem (10) zur Kommunikation mit einem ersten terrestrischen Netzwerk und einem zweiten terrestrischen Netzwerk, mit:
einem Satellitensystem (12);
einem ersten Bodensystem (14) auf einem ersten Landgebiet (18), das mit dem ersten terrestrischen Netzwerk verbunden ist und optisch mit dem Satellitensystem (12) verbunden ist, wobei das erste Bodensystem (14) eine erste Vielzahl optisch verbundener Bodenstationen aufweist, das erste Bodensystem ausgelegt ist, eine erste Bodenstation zu bestimmen, die den am geringsten gestörten Pfad zwischen dem Satellitensystem und der ersten Vielzahl von Bodenstationen besitzt; und
einem zweiten Bodensystem (16) auf einem zweiten Landgebiet (22), das mit dem zweiten terrestrischen Netzwerk verbunden ist und optisch mit dem Satellitensystem verbunden ist, wobei das zweite Bodensystem eine Vielzahl von optisch verbundenen Bodenstationen aufweist, wobei das zweite Bodensystem ausgelegt ist, eine zweite Bodenstation zu bestimmen, die den am wenigstens gestörten Pfad zwischen dem Satellitensystem und der zweiten Vielzahl von Bodenstationen besitzt,
wobei das zweite Bodensystem (16) mit dem ersten Bodensystem über das Satellitensystem und den am wenigsten gestörten Pfad zwischen dem Satellitensystem und der ersten Vielzahl von Bodenstationen und den am wenigsten gestörten Pfad zwischen dem Satellitensystem und der zweiten Vielzahl von Bodenstationen kommuniziert.

2. Satelliten-Bündelfunksystem nach Anspruch 1, **dadurch gekennzeichnet, dass** das Satellitensystem zumindest einen ersten Satelliten (12) aufweist.

3. Satelliten-Bündelfunksystem nach Anspruch 2, **dadurch gekennzeichnet, dass** das Satellitensystem einen zweiten Satelliten (24) aufweist, der optisch mit dem ersten Satelliten (12) verbunden ist.

4. Satelliten-Bündelfunksystem nach Anspruch 3, **dadurch gekennzeichnet, dass** der zweite Satellit (24) in Verbindung mit dem zweiten Bodensystem (16) steht und der erste Satellit (12) mit dem ersten Bodensystem (14) in Verbindung steht.

5. Bündelfunksystem nach Anspruch 1, **dadurch gekennzeichnet, dass** das Satellitensystem (12) ausgelegt ist, optische Signale zu senden und zu empfangen,
wobei das erste Bodensystem (14) optisch mit dem Satelliten (12) verbunden ist; und
das zweite Bodensystem (16) optisch mit dem Satellitensystem (12) verbunden ist;
wobei das erste Bodensystem (14) optische Signale von dem Satellitensystem (12) über den am wenigsten gestörten Pfad zwischen dem Satellitensystem und der ersten Vielzahl von Bodenstationen sendet und empfängt,
wobei der Satellit optische Signale von dem ersten Bodensystem über den am wenigsten gestörten Pfad zwischen dem Satellitensystem und der ersten Vielzahl von Bodenstationen sendet und empfängt, wobei das zweite Bodensystem optische Signale von dem Satelliten(12)system über den am wenigsten gestörten Pfad zwischen dem Satellitensystem und der zweiten Vielzahl von Bodenstationen sendet und empfängt.

6. Bündelfunksystem nach Anspruch 5, **dadurch gekennzeichnet, dass** das erste Bodensystem (14) auf einem ersten Landgebiet (18) angeordnet ist und das zweite Bodensystem (16) auf einem zweiten Landgebiet (22) angeordnet ist.

7. Bündelfunksystem nach Anspruch 1, **dadurch gekennzeichnet, dass** das erste Bodensystem (14) eine Vielzahl von Bodenstationen (14) aufweist, die in einem vorbestimmten Abstand zueinander angeordnet sind.

8. Bündelfunksystem nach Anspruch 7, **dadurch gekennzeichnet, dass** die erste Vielzahl von Bodenstationen über ein Lichtwellenleiter-Ringnetzwerk (32) verbunden sind.

## Revendications

1. Système de liaison par satellite (10), destiné à communiquer avec un premier réseau terrestre et un second réseau terrestre, comprenant :
un système satellitaire (12) ;
un premier système au sol (14) sur une première masse terrestre (18), couplé au premier réseau terrestre et couplé optiquement au système satellitaire (12), ledit premier système au sol (14) comptant une première pluralité de stations au sol couplées optiquement, ledit premier système au sol étant conçu pour déterminer une première station au sol bénéficiant d'un trajet ayant le moins de distorsions entre le système satellitaire et la première pluralité de stations au sol ; et
un second système au sol (16) sur une seconde masse terrestre (22), couplé au second réseau terrestre et couplé optiquement au système satellitaire, ledit second système au sol comprenant une pluralité de stations au sol couplées optiquement, ledit second système au sol étant conçu pour déterminer une seconde station au sol bénéficiant d'un trajet ayant le moins de distorsions entre le système satellitaire et la seconde pluralité de stations au sol, ledit second système au sol (16) communiquant avec ledit premier système au sol via ledit système satellitaire et le trajet ayant le moins de distorsions entre le système satellitaire et la première pluralité de stations au sol et le trajet ayant le moins de distorsions entre le système satellitaire et la seconde pluralité de stations au sol.

2. Système de liaison par satellite selon la revendication 1, **caractérisé en ce que** ledit système satellitaire comprend au moins un premier satellite (12).

3. Système de liaison par satellite selon la revendication 2, **caractérisé en ce que** ledit système satellitaire comprend un second satellite (24) couplé optiquement avec ledit premier satellite (12).

4. Système de liaison par satellite selon la revendication 3, **caractérisé en ce que** ledit second satellite (24) est en communication avec ledit second système au sol (16) et ledit premier satellite (12) est en communication avec ledit premier système au sol (14).

5. Système de liaison selon la revendication 1, **caractérisé en ce que** :
ledit système satellitaire (12) est conçu pour envoyer et recevoir des signaux optiques ;
ledit premier système au sol (14) est couplé optiquement avec ledit satellite (12) ; et
ledit second système au sol (16) est couplé optiquement avec ledit système satellitaire (12) ;
ledit premier système au sol (14) envoyant et recevant des signaux optiques en provenance dudit système satellitaire (12) via le trajet ayant le moins de distorsions entre le système satellitaire et la première pluralité de stations au sol ;
ledit satellite envoyant et recevant des signaux optiques en provenance dudit premier système au sol via le trajet ayant le moins de distorsions entre le système satellitaire et la première pluralité de stations au sol ;
ledit second système au sol envoyant et recevant des signaux optiques dudit système satellitaire (12) via le trajet ayant le moins de distorsions entre le système satellitaire et la seconde pluralité de stations au sol.

6. Système de liaison selon la revendication 5, **caractérisé en ce que** ledit premier système au sol (14) est positionné sur une première masse terrestre (18) et ledit second système au sol (16) est positionné sur une seconde masse terrestre (22).

7. Système de liaison selon la revendication 1, **caractérisé en ce que** ledit premier système au sol (14) comprend une pluralité de stations au sol (14) positionnées à une distance prédéterminée les unes des autres.

8. Système de liaison selon la revendication 7, **caractérisé en ce que** ladite première pluralité de stations au sol sont couplées par un réseau de fibres optiques en anneau (32).
